**Europäisches Patentamt**

**European Patent Office**

**Office européen des brevets**

(19)

(11) Numéro de publication : **0 435 130 B1**

(12)

# FASCICULE DE BREVET EUROPEEN

(45) Date de publication du fascicule du brevet :
05.04.95 Bulletin 95/14

(51) Int. Cl.⁶ : **H04J 3/07, H04J 3/12**

(21) Numéro de dépôt : **90124539.9**

(22) Date de dépôt : **18.12.90**

(54) **Dispositif d'insertion d'éléments binaires d'information dans une structure de trame déterminée.**

(30) Priorité : **27.12.89 FR 8917256**

(43) Date de publication de la demande :
**03.07.91 Bulletin 91/27**

(45) Mention de la délivrance du brevet :
**05.04.95 Bulletin 95/14**

(84) Etats contractants désignés :
**AT BE CH DE ES FR GB IT LI NL SE**

(56) Documents cités :
**EP-A- 0 334 357
DE-A- 2 641 488
DE-A- 3 600 795
US-A- 4 884 268**

(73) Titulaire : **ALCATEL CIT
12 Rue de la Baume
F-75008 Paris (FR)**

(72) Inventeur : **Regent, Philippe
8, rue Nicéphore Niepce
F-91410 Dourdan (FR)**

(74) Mandataire : **Weinmiller, Jürgen et al
Lennéstrasse 9
Postfach 24
D-82336 Feldafing (DE)**

Jouve, 18, rue Saint-Denis, 75001 PARIS

## Description

La présente invention concerne les transmissions numériques, et plus particulièrement les transmissions numériques en mode multiplex temporel.

Les structures de trames de trains numériques ainsi multiplexés sont variables suivant le débit des affluents à multiplexer et font, pour la plupart d'entre elles, l'objet de recommandations de la part du CCITT.

Elles comportent d'une manière générale des emplacements temporels réservés à la transmission de signaux dits d'information représentant la charge de trafic utile à transmettre et des emplacements temporels réservés à la transmission de signaux dits auxiliaires, tels que des signaux de service ou de justification.

La présente invention a plus particulièrement pour objet un dispositif réalisant une insertion d'éléments binaires constitutifs d'un train numérique de débit donné aux emplacements temporels réservés à la transmission de signaux d'information de trames de structure donnée.

L'invention s'applique particulièrement à la constitution de trames pour trains numériques multiplexés par multiplexage temporel d'affluents numériques à différents débits, suivant une hiérarchie de multiplexage synchrone, telle que définie dans les recommandations G707, G708, G709 du CCITT.

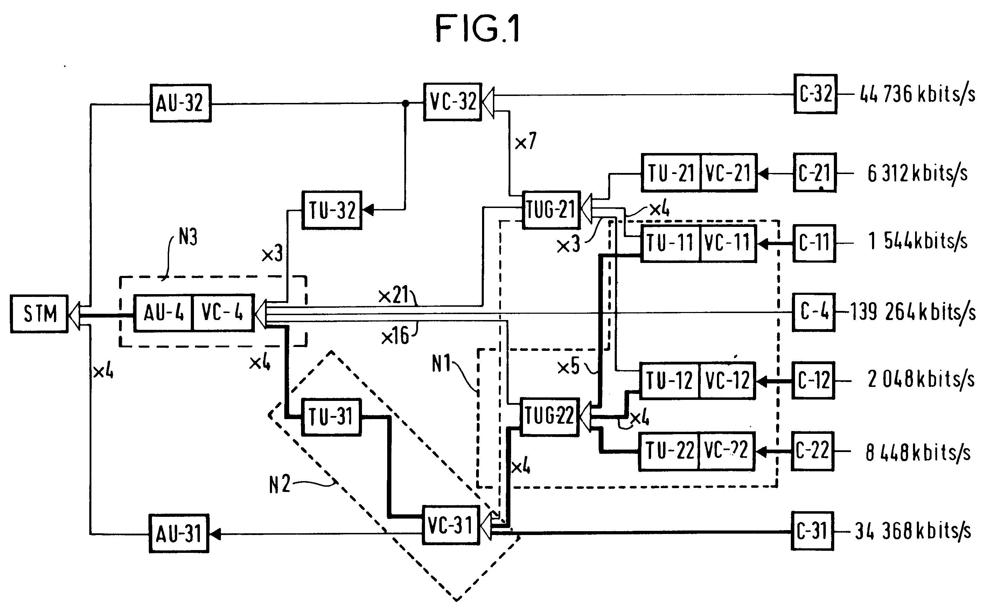

Le principe d'une telle hiérarchie de multiplexage est rappelé de façon schématique sur la figure 1. Les différents débits multiplexables par cette hiérarchie sont les débits 2 048 kbit/s - 8 448 kbit/s-34 368 kbit/s- 1 554 kbit/s - 6 312 kbit/s - 44 736 kbit/s et 139 264 kbit/s recommandés par le CCITT et rappelés sur la partie droite de cette figure.

Cette hiérarchie de multiplexage présente plusieurs structures de multiplexage possibles suivant le débit des affluents à multiplexer pour une application considérée, et chaque structure de multiplexage, telle que celle repérée en traits renforcés sur cette figure, correspondant à des affluents à multiplexer de débits 1 544 kbit/s - 2 048 kbit/s - 8 448 kbit/s et 34 368 kbit/s, comporte plusieurs niveaux hiérarchiques, repérés N1, N2, N3 dans l'exemple considéré, en allant de la partie droite de la figure vers la partie gauche, dans le sens de formation des trames à partir des différents affluents.

Aux différents niveaux hiérarchiques d'une structure de multiplexage sont susceptibles d'être introduits des affluents et sont constituées des entités appelées conteneurs et des entités appelées unités de multiplexage. Les unités de multiplexage constituées à un niveau hiérarchique donné, et référencées TU ou AU (TU11, TU12, TU22 pour le niveau N1, TU31 pour le niveau N2 et AU4 pour le niveau N3 dans l'exemple considéré) sont formées par adjonction, aux conteneurs constitués au même niveau hiérarchique, de signaux d'indexation et de justification de ces conteneurs par rapport à ces unités de multiplexage.

Les conteneurs constitués à un niveau hiérarchique donné, et référencés VC (VC11, VC12, VC22 pour le niveau N1, VC31 pour le niveau N2, et VC4 pour le niveau N3 dans l'exemple considéré) sont formés chacun par adjonction de signaux auxiliaires, suivant le cas soit à un signal multiplex issu du multiplexage d'unités de multiplexage constituées à un niveau hiérarchique inférieur, soit à un signal, dit signal d'information, prélevé sur un affluent introduit au niveau considéré, référencé C(C11, C12, C22 pour le niveau N1, et C31 pour le niveau N2, dans l'exemple considéré).

Dans le cadre de son application à la constitution de telles trames, l'invention est plus particulièrement utilisée pour réaliser une insertion d'affluents à l'intérieur de conteneurs. Dans ce qui suit on décrira plus particulièrement l'insertion d'un affluent C4 à 139 264 kbit/s dans un conteneur VC4.

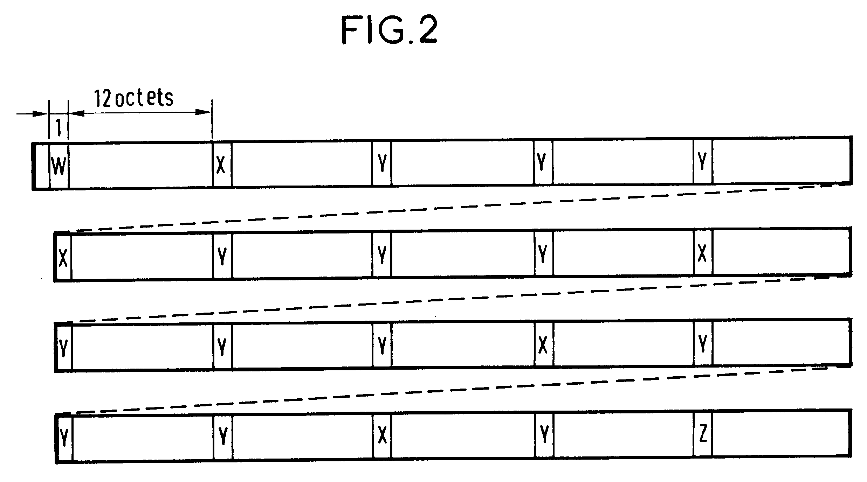

La figure 2 représente la structure de trame d'un conteneur VC4, telle que définie par les avis précités du CCITT, ce conteneur VC4 étant articulé en supertrames formées chacune d'une succession de neuf telles trames. Comme il apparaît sur cette figure, les éléments binaires constitutifs du train numérique à 139 264 kbit/s formant l'affluent C4 sont insérés dans cette trame par groupes de 12 octets dits octets d'information, non référencés, et sont séparés par des octets dits d'insertion systématique, référencés X, Y. Le premier groupe de 12 octets est toutefois précédé d'un octet référencé W affecté à la transmission d'éléments binaires d'information, l'octet W étant lui-même précédé d'un octet d'insertion systématique. Le dernier groupe de 12 octets est de même précédé d'un octet particulier, référencé Z, affecté en partie à la transmission d'éléments binaires d'information, référencés I. Le huitième élément binaire de l'octet Z est un élément binaire, référencé R, dit de remplissage, c'est-à-dire non pris en compte à la réception des trames du conteneur VC4. Le septième élément binaire de l'octet Z est un élément binaire référencé S, dit d'opportunité de justification de l'affluent C4 par rapport au conteneur VC4, pour la trame considérée, et peut donc consister, suivant l'état de justification de cette trame, soit en un élément binaire d'information, soit en un élément binaire de remplissage.

On rappelle que la justification est une technique classique permettant de réaliser une adaptation de débit entre le débit des éléments binaires qui sont à insérer, et le débit d'insertion de ces éléments binaires. Dans l'exemple considéré, où il s'agit d'une justification positive, l'élément binaire S d'une trame est un élément binaire d'information de l'affluent C4 sauf si cet affluent est justifié par rapport au conteneur VC4 pour la trame considérée, auquel cas le bit S est un élément binaire de remplissage. L'état justifié ou non justifié d'une trame est indiqué par la valeur d'un élément binaire C dit d'indication de justification, l'élément binaire C occupant en l'occurence le premier emplacement des octets d'insertion systématique X.

La mise en oeuvre de cette technique requiert classiquement une mémoire-tampon dans laquelle sont inscrits les éléments binaires d'information incidents sous la commande d'une horloge d'écriture au rythme de ces éléments binaires et qui est lue sous la commande d'une horloge de lecture au rythme d'insertion considéré, et un comparateur de phase des horloges d'écriture et de lecture commandant en fonction du résultat de la comparaison les éventuelles justifications. En cas de justification, l'insertion d'un élément binaire de justification en lieu et place d'un élément binaire d'information provoque alors un retard à l'insertion de cet élément binaire d'information, qui est obtenu par un ajustement correspondant du rythme de lecture de la mémoire-tampon.

Dans l'exemple considéré, les valeurs de débits en cause, soit 139 264 kbit/s, et 1 55 520 kbit/s sont telles que le dispositif réalisant cette insertion ne peut, s'il est réalisé suivant certaines technologies, fonctionner directement à ces débits mais à des débits réduits nécessitant une division des trains numériques entrants et sortants en "n" trains de débit réduit, auquel cas le principe de mémoire-tampon exposé ci-dessus n'est plus applicable directement.

Le document EP-A- 0 334 357 décrit un dispositif d'insertion d'éléments binaires d'information dans une structure de trame déterminée, à des emplacements déterminés, dont au moins un est susceptible de comporter au moins un élément binaire dit de justification.

Ledit dispositif comporte :
- des moyens pour diviser le train numérique incident, de débit D1, en "n" trains numériques de débit réduit $D_1/n$,
- une mémoire dans laquelle sont inscrits, au rythme réduit D1/n, et lus, au rythme réduit $D_2/n$, des mots successifs de "n" éléments binaires issus desdits moyens pour diviser, où D2/n désigne le rythme d'insertion de ces mots dans les trames sortantes, associée à des moyens de commande de justification, par comparaison de ses rythmes de lecture et d'écriture, cette mémoire ayant une capacité déterminée pour contenir à chaque instant défini par le rythme d'insertion réduit $D_2/n$ des éléments binaires constitutifs des mots provenant desdits moyens pour diviser, ce nombre variable étant fonction des commandes de justification générées antérieurement;
- des moyens pour sélectionner, à chaque instant défini par le rythme d'insertion réduit $D_2/n$ et en fonction des commandes de justification générées antérieurement, "n" éléments binaires contenus dans la mémoire, qui sont à insérer ou à réinsérer à cet instant,
- et des moyens de blocage temporaire de l'horloge de lecture de la mémoire lorsque la commande de justification générée à un instant est telle que le nombre d'éléments binaires à stocker dans la mémoire dépase une valeur limite prédéterminée de remplissage de cette mémoire.

La présente invention a pour objet un dispositif d'insertion d'éléments binaires d'information dans une structure de trame déterminée, à des emplacements déterminés, dont au moins un est susceptible de comporter au moins un élément dit de justification, du type décrit ci-dessus, dans lequel
- la mémoire comporte une mémoire-tampon de capacité fixée, et une mémoire dite élastique qui comporte un premier et un deuxième registre de "n" éléments binaires chacun, formant un registre à décalage de mots de "n" éléments binaires, le premier registre recevant les mots issus de la mémoire-tampon,
- et les moyens de sélection comportent un ensemble de "n" éléments de sélection aptes à sélectionner "m" premiers éléments binaires du premier registre et "n-m" derniers éléments binaires du deuxième registre, pour toutes les valeurs de "m" comprises entre 1 (inclus) et n (inclus).

D'autres objets et caractéristiques de la présente invention apparaîtront plus clairement à la lecture de la description suivante d'un exemple de réalisation, faite en relation avec les dessins ci-annexés dans lesquels, outre les figures 1 et 2 déjà décrites :
- la figure 3 est un schéma de principe d'un dispositif d'insertion suivant l'invention,
- les figures 4a et 4b sont des tableaux illustrant le principe de fonctionnement de la mémoire élastique,
- la figure 5 est un schéma de la mémoire élastique et des moyens de sélection d'éléments binaires contenus dans cette mémoire élastique,
- la figure 6 est un schéma des moyens de commande de ces moyens de sélection et des moyens de blocage de l'horloge de lecture de la mémoire-tampon.

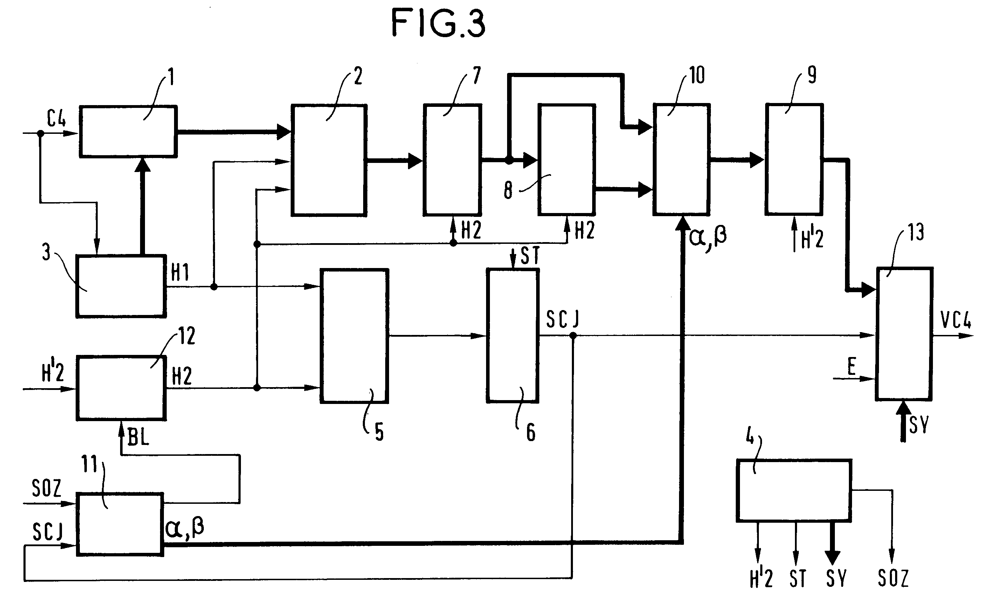

Sur la figure 3, les éléments binaires constitutifs du train numérique entrant, c'est-à-dire, dans l'exemple considéré, d'un affluent C4 au rythme D1 de 139 264 kbit/s sont appliqués à un démultiplexeur 1 permettant, de façon connue, de diviser ce train en "n" trains de débit réduit, égal en l'occurrence à 34816 kbit/s, "n" étant en effet pris, à titre d'exemple, égal à 4.

Les mots successifs de quatre éléments binaires obtenus en sortie du démultiplexeur 1 sont inscrits dans une mémoire tampon 2, sous la commande d'un

signal d'horloge $H_1$ au rythme de 34816 kbit/s obtenu par division par quatre du rythme $D_1$ récupéré dans un circuit 3 de récupération de rythme opérant à partir du train numérique C4 et commandant en outre le démultiplexeur 1.

La lecture de la mémoire tampon 2 est commandée par un signal d'horloge H2 de rythme égal à D2/4, où D2 désigne le rythme d'insertion d'éléments binaires à l'intérieur d'une trame d'un conteneur VC4, dans lequel, ainsi qu'il sera vu ci-après, certaines transitions sont absentes. Ce signal H2 est obtenu, ainsi qu'il sera vu plus loin, à partir d'un signal H'2 définissant les instants d'insertion de mots de quatre éléments binaires issus du démultiplexeur 1.

Un comparateur de phase 5 effectue pour chaque trame du conteneur VC4, une comparaison de ces signaux d'horloge de commande d'écriture et de lecture, de manière à élaborer, suivant des critères connus, un signal SCJ de commande de justification, qui est mémorisé pendant la durée d'une trame dans une mémoire 6 et qui peut éventuellement représenter directement l'élément binaire C d'indication de justification.

Les mots successifs de quatre éléments binaires obtenus en sortie de la mémoire tampon 2 sont transférés, sous la commande du signal H2 dans un registre 7 de quatre éléments binaires.

Avant écriture d'un nouveau mot dans le registre 7, le mot précédemment écrit dans ce registre est transféré dans un registre 8 de quatre éléments binaires, également commandé par le signal $H_2$, l'ensemble formé par ces deux registres formant ainsi un registre à décalage opérant sur des mots de quatre éléments binaires.

Le mot de quatre éléments binaires, ou quartet, à insérer à un instant donné, c'est-à-dire à une transition donnée du signal d'horloge H'2 dans une trame du conteneur VC4 est obtenu en sortie d'un registre 9 de quatre éléments binaires, commandé par le signal H'2, dans lequel a été inscrit à un instant précédent un quartet constitué comme on le verra par la suite, soit du quartet stocké dans le registre 7, soit d'un quartet formé pour partie d'éléments binaires du mot stocké dans le registre 7 et pour partie d'éléments binaires du mot stocké dans le registre 8, la sélection de ces éléments binaires étant effectuée au moyen d'un sélecteur 10.

Le sélecteur 10 est commandé par des signaux $\alpha,\beta$ issus d'un séquenceur 11 qui délivre une valeur actualisée de ces signaux à partir de leur valeur précédente et à partir de signaux de commande consistant en un signal SOZ de synchronisation de deuxièmes quartets constitutifs des octets Z des trames VC4, issu de la base de temps 4, et en le signal SCJ de commande de justification issu de la mémoire 6 recevant elle-même un signal ST de synchronisation de trames VC4 également issu de la base de temps 4.

L'ensemble formé par les registres 7, 8, 9 et par le sélecteur 10, ainsi que le séquenceur 11 seront décrits de façon plus détaillée dans ce qui suit.

Le signal d'horloge H2 est par ailleurs obtenu en bloquant certaines transitions du signal d'horloge H'2 au moyen d'un circuit de blocage 12, connu en soi, et commandé, comme il sera décrit par la suite, par le séquenceur 11.

Les trames du conteneur VC4 sont obtenues en sortie d'un multiplexeur 13 qui reçoit sur des premières entrées des quartets d'information issus du registre 9, sur une deuxième entrée l'élément binaire C d'indication de justification et sur des troisièmes entrées des éléments E correspondant à des éléments d'insertion systématique autres que l'élément binaire C d'indication de justification, ces éléments E formant avec l'élément binaire C des octets et donc des quartets entiers. Ce multiplexeur est commandé par des signaux de synchronisation référencés SY, fournis par la base de temps 4, et repérant les emplacements correspondant aux divers éléments à insérer ainsi dans les trames du conteneur VC4.

On notera que le signal H'2 est constitué d'un signal d'horloge au rythme D2/4 dans lequel les transitions correspondant aux emplacements des quartet formés des éléments E et de l'élément C sont absentes.

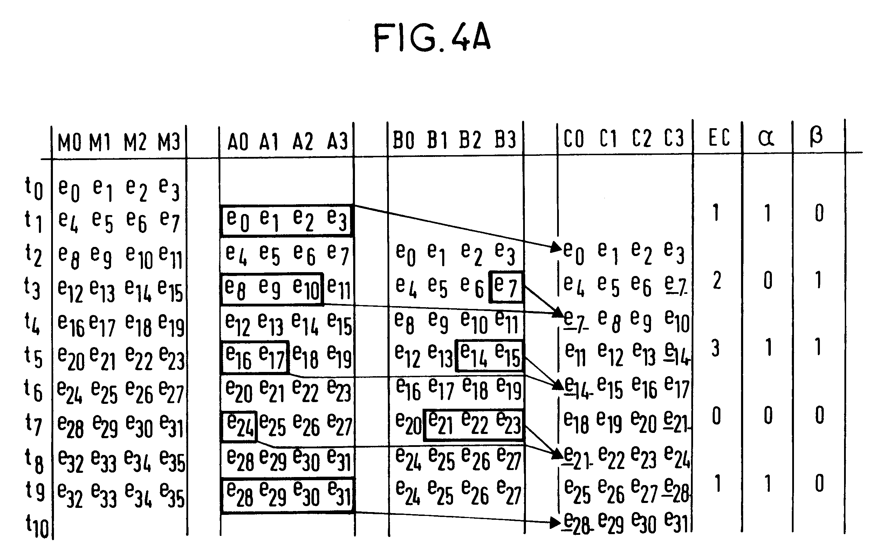

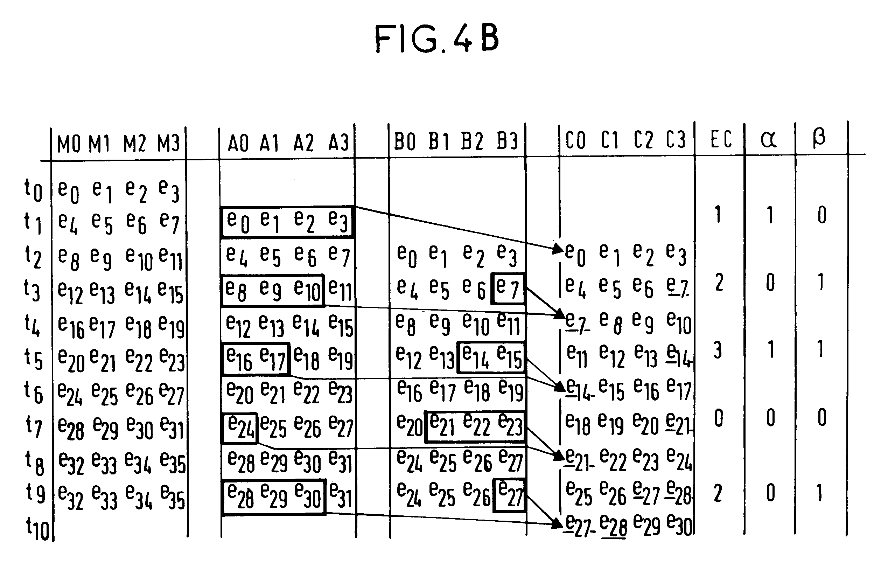

On décrit maintenant en relation avec les tableaux des figures 4a et 4b, le principe de fonctionnement du sélecteur 10 et du séquenceur 11, en commençant par le tableau de la figure 4a.

Soient $M_0M_1M_2M_3$, $A_0A_1A_2A_3$, $B_0B_1B_2B_3$ et $C_0C_1C_2C_3$ les sorties respectivement de la mémoire-tampon 2 et des registres 7, 8, 9, sur lesquelles sont délivrées à un instant-quartet quelconque des quartets stockés dans ces éléments.

Soient par ailleurs $e_i$ $e_{i+1}$ $e_{i+2}$ $e_{i+3}$ les éléments binaires formant le quartet disponible à un instant quartet donné, correspondant à une transition donnée du signal d'horloge H'2, en sortie de l'un de ces éléments, les indices croissant de i à i+3 représentant l'ordre de réception de ces éléments binaires sur le train numérique incident de débit $D_1$ et les éléments binaires d'indices croissants étant disponibles sur les sorties d'indices croissants respectivement de l'élément considéré.

On a indiqué dans différentes colonnes correspondant à ces différents éléments les différents quartets stockés dans ces éléments pour différents instants quartets successifs $t_i$, correspondant à différentes lignes de ce tableau.

On désigne par "m" le nombre d'éléments binaires du registre 7 sélectionné par le sélecteur 10, et par "n-m" le nombre d'éléments binaires du registre 8 sélectionnés par le sélecteur 10, "n" étant en l'occurence égal à 4.

On suppose par ailleurs que les conditions initiales sont telles que le sélecteur 10 sélectionne à l'instant initial to les quatre éléments binaires présents

sur les sorties $A_0A_1A_2A_3$ du registre 7 ("m" étant alors égal à 4).

Le sélecteur 10 continue alors à fonctionner de cette façon jusqu'à un instant constitué, pour fixer les idées, par l'instant quartet $t_3$, correspondant à l'emplacement de la deuxième moitié de l'octet Z pour la trame considérée.

A cet instant, le quatrième élément binaire du quartet à insérer est un élément binaire de remplissage qui peut être constitué, ainsi que c'est le cas ici, de l'élément binaire, soit $e_7$, présent juste avant cet instant sur la sortie $A_3$. Il est alors nécessaire de procéder à la répétition de l'élément binaire $e_7$ au début de l'instant quartet suivant.

Le troisième élément binaire du quartet à insérer étant un élément binaire d'opportunité de justification, il peut également être nécessaire, suivant l'état de justification de la trame à cet instant, de procéder à la répétition de l'élément binaire $e_6$ au début de l'instant quartet suivant.

Pour fixer les idées, on suppose que la trame considérée n'est pas justifiée et qu'il y a donc lieu de ne pas répéter l'élément binaire $e_6$. Dans ce cas, le quartet à insérer dans la trame à l'instant $t_4$, c'est-à-dire le quartet stocké dans le registre 9 à cet instant, est le quartet $e_7e_8e_9e_{10}$, le quartet inséré dans la trame à l'instant $t_3$ étant le quartet $e_4e_5e_6e_7$.

Comme il apparaît sur ce tableau, le sélecteur 10 doit pour cela être positionné de manière à sélectionner le quatrième élément binaire ($e_7$) du quartet stocké dans le registre 8 et les trois premiers éléments binaires ($e_8$ $e_9$ $e_{10}$) du quartet stocké dans le registre 7 ("m" étant alors égal à 3).

Le sélecteur 10 conserve cette nouvelle position jusqu'à l'instant-quartet correspondant à l'emplacement de la deuxième moitié de l'octet Z de la trame suivante, choisi, à dessein et sans aucun rapport avec les valeurs numériques considérées pour l'indice i, comme étant l'instant $t_5$.

Si la trame considérée n'est pas justifiée, la nouvelle position du sélecteur 10 à l'instant suivant $t_6$ doit alors permettre de sélectionner les deux derniers éléments binaires ($e_{14}e_{15}$) du quartet stocké dans le registre 8 et les deux premiers éléments binaires ($e_{16}e_{17}$) du quartet stocké dans le registre 7 ("m" étant alors égal à 2).

En raisonnant de même aux instants suivants $t_7$ et $t_8$, la nouvelle position du sélecteur 10 à l'instant $t_8$ doit permettre de sélectionner les trois derniers éléments binaires ($e_{21}e_{22}e_{23}$) du quartet stocké dans le registre 8 et le premier élément binaire ($e_{24}$) du quartet stocké dans le registre 7 ("m" étant alors égal à 1).

En faisant les mêmes hypothèses à l'instant $t_9$ suivant, les quartets disponibles en sortie de la mémoire 2 et des registres 7 et 8 ne doivent pas être modifiés à cet instant, et la position du sélecteur 10 à l'instant $t_{10}$ doit à nouveau permettre de sélectionner les quatre éléments binaires du quartet stocké dans le registre 7 ("m" redevenant alors égal à 4). En effet, si on laissait le processus décrit précédemment se poursuivre, l'élément binaire qui serait à répéter dans les mêmes conditions à l'instant t10 serait perdu.

Dans la figure 4b, on a repris le tableau de la figure 4a de l'instant $t_0$ jusqu'à l'instant $t_8$ et on a considéré pour l'instant $t_9$, le cas où la trame est justifiée. Dans cette hypothèse, les quartets disponibles en sortie de la mémoire 2 et des registres 7 et 8 ne doivent pas à l'instant $t_9$ être modifiés, et le sélecteur 10, qui sélectionne à cet instant les trois derniers éléments binaires du quartet stocké dans le registre 8 et le premier élément binaire du quartet stocké dans le registre 7, est positionné à l'instant $t_{10}$ pour sélectionner le dernier élément binaire ($e_{27}$) du quartet stocké dans le registre 8 et les trois premiers éléments binaires ($e_{28}$ $e_{29}$ $e_{30}$) du quartet stocké dans le registre 7.

L'ensemble formé par les registres 7 et 8 peut également être vu du point de vue de la fonction de mémorisation d'éléments binaires non encore insérés, ou non encore réinsérés, qu'il remplit, comme un seul registre formant une mémoire élastique ayant une capacité principale à remplissage fixe de quatre éléments binaires, (représentée par le registre 7) et une capacité additionnelle à remplissage variable de zéro à trois éléments binaires (représentée par les trois derniers éléments binaires du registre 8) soit globalement une mémoire élastique à remplissage variable de quatre à sept éléments binaires, et dans lequel le nombre d'éléments binaires non encore insérés ou non encore réinsérés est, dans l'exemple considéré, accru d'une ou deux unités à chaque instant quartet correspondant à la deuxième moitié de l'octet Z selon que la trame considérée n'est pas ou est justifiée.

Lorsque le remplissage global de ce registre unique est égal à une valeur limite de remplissage, soit ici sept éléments binaires (ou plus généralement 2n-1 éléments binaires), ce qui est le cas aux instants $t_7$ et $t_8$ considérés précédemment, et que le nombre d'éléments binaires non encore insérés ou non encore réinsérés doit s'accroître (d'une ou de deux unités), il est donc nécessaire de bloquer le signal d'horloge de lecture de la mémoire-tampon 2, ce qui est fait à l'instant $t_9$, à défaut de quoi une perte d'information se produirait.

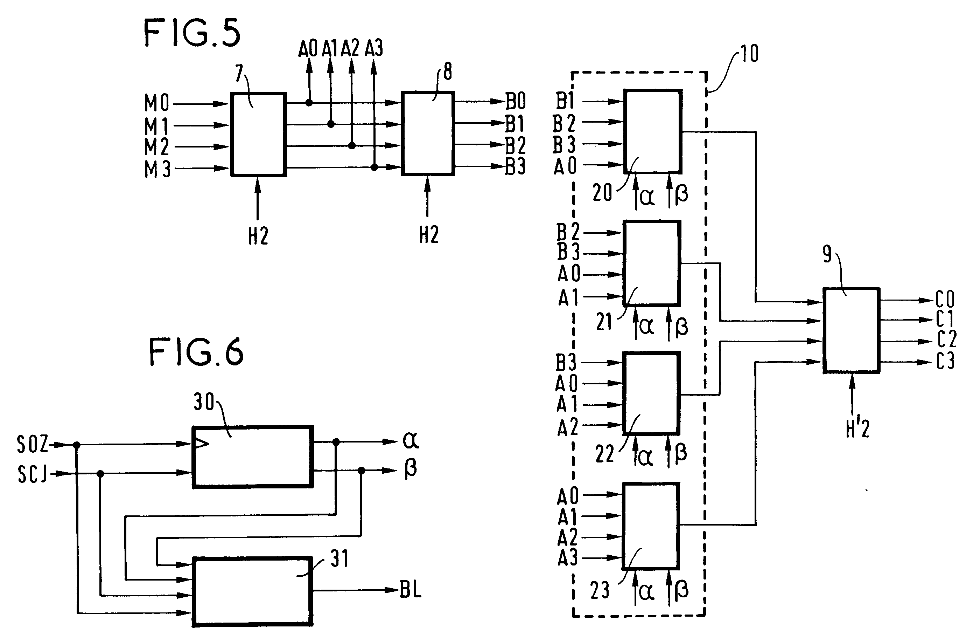

On décrit maintenant, en relation avec la figure 5, un exemple de réalisation du sélecteur 10. Ce sélecteur est formé de quatre éléments de sélection ou multiplexeurs, 20, 21, 22, 23, à quatre entrées chacun connectées aux sorties $A_0A_1A_2A_3$ du registre 7 et aux sorties $B_0B_1B_2B_3$ du registre 8 de manière à réaliser les différentes combinaisons possibles qui ont été mises en évidence sur les tableaux des figures 4a et 4b. Plus précisément, le multiplexeur 20 a ses entrées de données connectées aux sorties $A_0B_1B_2B_3$, le multiplexeur 21 a ses entrées de données connectées aux sorties $A_0A_1B_2B_3$, le multiplexeur 22 a ses entrées de données connectées aux sorties $A_0A_1A_2B_3$, et le multiplexeur 23 a ses entrées de données connectées aux sorties $A_0A_1A_2A_3$.

Chacun de ces multiplexeurs reçoit sur ses entrées de commande les signaux $\alpha,\beta$ issus du séquenceur 11 qui est maintenant décrit en relation avec la figure 6.

Ce séquenceur comporte un compteur par quatre, référencé 30, incrémenté par le signal SOZ de synchronisation de deuxièmes quartets constitutifs d'octets Z. Ce compteur a un pas d'incrémentation qui peut être égal à 1 ou à 2 suivant que la trame considérée est non justifiée ou justifiée. Il est muni d'une entrée de commande de ce pas d'incrémentation qui reçoit le signal SCJ de commande de justification issu de la mémoire 6 (figure 3).

Les signaux $\alpha$,$\beta$ de commande du sélecteur 10 sont obtenus directement sur les deux sorties parallèle de ce compteur.

Les tableaux des figures 4a et 4b sont complétés par les valeurs des signaux $\alpha$ et $\beta$ ainsi que par les états de comptage EC (de 0 à 3) de ce compteur, pour l'exemple considéré.

Soient $\alpha = 0$ et $\beta = 0$ les valeurs des signaux de sortie du compteur 30 correspondant à un remplissage de la mémoire élastique formée des registres 7 et 8 égal à la valeur limite de remplissage, c'est-à-dire à sept comme indiqué ci-dessus, et $\alpha = \beta = 1$ les valeurs des signaux de sortie du compteur 30 correspondant à l'état de comptage de ce compteur précédant l'état de comptage correspondant aux valeurs $\alpha = \beta = 0$.

Soient également SOZ= 1 la valeur, à l'emplacement effectif de la deuxième moitié d'un octet Z, du signal de synchronisation de deuxièmes quartets constitutifs des octets Z, et SCJ = 1 la valeur du signal de commande de justification indiquant qu'une justification est à effectuer.

Le signal BL fourni par le séquenceur 11 au circuit 12 de blocage de l'horloge de lecture de la mémoire-tampon 2 est obtenu en sortie d'un circuit de logique combinatoire 31 réalisant l'équation logique:

$$BL = \overline{\alpha} . \overline{\beta} . SOZ + \alpha . \beta . SCJ.SOZ$$

le signal BL bloquant ou non cette horloge de lecture selon sa valeur 1 ou 0.

Un blocage d'une transition du signal d'horloge H'2 est en effet à effectuer, pour inhiber une commande de lecture de la mémoire tampon 2 et une commande d'inscription dans la mémoire élastique soit lorsque le compteur 30 se trouve à l'état de comptage correspondant à $\alpha = \beta = 0$, lorsque survient le signal de synchronisation de deuxièmes quartets constitutifs des octets Z, quelle que soit la valeur du signal de commande de justification pour la trame considérée, soit lorsque le compteur 30 se trouve à l'état de comptage correspondant à $\alpha = \beta = 1$ lorsque survient ce signal de synchronisation et que la trame considérée est justifiée.

**Revendications**

1. Dispositif d'insertion d'éléments binaires d'information dans une structure de trame déterminée, à des emplacements déterminés, dont au moins un est susceptible de comporter au moins un élément binaire dit de justification, comportant

   - des moyens (1) pour diviser le train numérique incident, de débit $D_1$, en "n" trains numériques de débit réduit D1/n,
   - une mémoire (2, 7, 8) dans laquelle sont inscrits , au rythme D1/n, et lus, au rythme réduit D2/n, des mots successifs de "n" éléments binaires issus desdits moyens pour diviser, où $D_2/n$ désigne le rythme d'insertion de ces mots dans les trames sortantes, associée à des moyens de commande de justification (3, 12, 5, 6), par comparaison de ses rythmes de lecture et d'écriture, cette mémoire ayant une capacité déterminée pour contenir, à chaque instant défini par le rythme d'insertion réduit $D_2/n$, un nombre variable des éléments binaires constitutifs de mots provenant desdits moyens pour diviser, ce nombre variable étant fonction des commandes de justification générées antérieurement,
   - des moyens (10) pour sélectionner, à chaque instant défini par le rythme d'insertion réduit D2/n, et en fonction des commandes de justification générées antérieurement, "n" éléments binaires contenus dans la mémoire (2, 7, 8), qui sont à insérer ou à réinsérer à cet instant,
   - des moyens (12) de blocage temporaire de l'horloge de lecture de la mémoire lorsque la commande de justification générée à un instant donné est telle que le nombre d'éléments binaires à stocker dans la mémoire dépasse une valeur limite prédéterminée de remplissage de cette mémoire,
   caractérisé en ce :
   - que la mémoire (2, 7, 8) comporte une mémoire tampon (2) de capacité fixée, et une mémoire (7, 8) dite élastique qui comporte un premier et un deuxième registre de "n" éléments binaires chacun, formant un registre à décalage de mots de "n" éléments binaires, le premier registre recevant les mots issus de la mémoire-tampon,
   - et en ce que les moyens de sélection (10) comportent un ensemble de "n" éléments de sélection aptes à sélectionner "m" premiers éléments binaires du premier registre et "n-m" derniers éléments binaires du deuxième registre, pour toutes les valeurs de "m" comprises entre 1 (inclus) et n (inclus).

2. Dispositif selon la revendication 1, caractérisé en ce que ladite valeur limite prédéterminée de remplissage de la mémoire élastique (7, 8) est choisie égale à 2n - 1- éléments binaires.

3. Dispositif selon la revendication 1, caractérisé en ce que ledit emplacement déterminé susceptible de comporter au moins un élément binaire de justification comportant également au moins un élément binaire dit de remplissage, le nombre d'éléments binaires stockés dans la mémoire élastique (7,8) et la commande des moyens de sélection (10), à chaque instant défini par le rythme d'insertion réduit D2/n, sont également fonction du nombre de trames constituées antérieurement.

4. Dispositif selon la revendication 1, caractérisé en ce que les "n" éléments de sélection sont commandés par un compteur (30) à "n" états de comptage, incrémenté par le rythme d'insertion de mots de "n" éléments binaires susceptibles de comporter un élément binaire de justification et comportant un élément binaire de remplissage, et dont le pas d'incrémentation peut prendre deux valeurs possibles suivant la commande de justification.

**Patentansprüche**

1. Vorrichtung zur Einfügung von binären Informationselementen in eine bestimmte Rahmenstruktur an bestimmten Stellen, von denen zumindest eine mindestens ein sogenanntes Berechtigungsbinärelement enthalten kann,

   - mit Mitteln (1), um den ankommenden Datenzug eines Durchsatzes D1 in n digitale Datenzüge verringerten Durchsatzes D1/n aufzuteilen,
   - mit einem Speicher (2, 7, 8), in den im Rhythmus D1/n aufeinanderfolgende Wörter von n Binärelementen, die am Ausgang der Teilermittel vorliegen, eingeschrieben und im reduzierten Rhythmus D2/n ausgelesen werden, wobei D2/n den Einfügungsrhythmus dieser Wörter in die ausgehenden Rahmen bezeichnet und wobei der Speicher mit Mitteln zur Berechtigungssteuerung (3, 12, 5, 6) durch Vergleich dieser Lese- und Schreibrhythmen zusammenwirkt und eine bestimmte Kapazität besitzt, um in jedem durch den reduzierten Einfügungsrhythmus D2/n definierten Zeitpunkt eine variable Anzahl von Binärelementen zu enthalten, die aus den Teilermitteln kommende Wörter bilden, wobei diese variable Anzahl von den vorher erzeugten Berechtigungssteuerungen abhängt,
   - mit Mitteln (10), um in jedem durch den reduzierten Einfügungsrhythmus D2/n definierten Zeitpunkt und abhängig von den vorher erzeugten Berechtigungssteuerungen n Binärelemente auszuwählen, die im Speicher (2, 7, 8) enthalten sind und in diesem Zeitpunkt einzufügen oder erneut einzufügen sind,
   - und mit Mitteln (12) zur vorübergehenden Blockierung des Lesetakts des Speichers, wenn die Berechtigungssteuerung, die in einem gegebenen Zeitpunkt erzeugt wird, so lautet, daß die Anzahl von im Speicher zu speichernden Binärelementen einen vorgegebenen Füllgrenzwert dieses Speichers überschreitet, dadurch gekennzeichnet,
   - daß der Speicher (2, 7, 8) einen Pufferspeicher (2) einer festen Kapazität und einen sogenannten elastischen Speicher (7, 8) enthält, der ein erstes und ein zweites Register mit je n Binärelementen enthält und ein Schieberegister zum Verschieben von Wörtern mit n Binärelementen bildet, wobei das erste Register die aus dem Pufferspeicher kommenden Wörter empfängt,
   - und daß die Auswahlmittel (10) eine Gruppe von n Auswahlelementen enthalten, die m erste Binärelemente aus dem ersten Register und n-m letzte Binärelemente aus dem zweiten Register auswählen können, und zwar für alle Werte von m zwischen 1 (einschließlich) und n (einschließlich).

2. Vorrichtung nach Anspruch 1, dadurch gekennzeichnet, daß der vorgegebene Grenzfüllwert des elastischen Speichers (7, 8) mit 2n-1 Binärelementen gewählt wird.

3. Vorrichtung nach Anspruch 1, dadurch gekennzeichnet, daß, wenn die bestimmte Stelle, die mindestens ein binäres Berechtigungselement enthalten kann, mindestens auch ein sogenanntes Füllelement enthält, die Anzahl der im elastischen Speicher (7, 8) gespeicherten Binärelemente und die Steuerung der Auswahlmittel (10) in jedem durch den reduzierten Einfügungsrhythmus D2/n definierten Zeitpunkt auch von der Anzahl von vorher gebildeten Rahmen abhängen.

4. Vorrichtung nach Anspruch 1, dadurch gekennzeichnet, daß die n Auswahlelemente von einem Zähler (30) mit n Zählzuständen gesteuert werden, der vom Einfügungsrhythmus der Wörter mit n Binärelementen gesteuert wird, die ein binäres Berechtigungselement enthalten können und außerdem ein binäres Füllelement enthalten, wobei der Inkrementierschritt zwei mögliche Werte je nach der Berechtigungssteuerung annehmen kann.

**Claims**

1. Device for inserting information bits into a specific frame structure at specific locations at least one of which may contain at least one justification opportunity bit, comprising:
   - means (1) for dividing the incoming digital bit stream with bit rate D1 into "n" digital bit streams with a reduced bit rate D1/n,
   - a memory (2, 7, 8) into which are written at the bit rate D1/n and read at the bit rate D2/n successive words of "n" bits from said divider means, where D2/n denotes the bit rate at which said words are inserted in the outgoing frames, associated with justification control means (3, 12, 5, 6) adapted to compare the read and write bit rates of said memory, this memory having a capacity determined to contain at each time defined by the reduced insertion bit rate D2/n a variable number of bits of words from said divider means, said number varying according to previously generated justification commands,
   - means (10) for selecting at each time defined by the reduced insertion bit rate D2/n, and according to previously generated justification commands, "n" bits contained in the memory (2, 7, 8) which are to be inserted or are to be reinserted at this time, and
   - means (12) for temporarily blocking the clock for reading the memory if the justification command generated at a given time is such that the number of bits to be stored in the memory exceeds a predetermined limit value,
      characterised in that:
   - the memory (2, 7, 8) includes a fixed capacity buffer memory (2) and an elastic memory (7, 8) which comprises first and second registers each of "n" bits forming a shift register for "n"-bit words, the first register receiving words from the buffer memory,
   - and in that the selector means (10) comprise a set of "n" selector units adapted to select "m" first bits from the first register and "n - m" last bits from the second register for all values of "m" between one and "n" inclusive.

2. Device according to claim 1 characterized in that said predetermined limit value for filling of the elastic memory (7, 8) is equal to $2n - 1$ bits.

3. Device according to claim 1 characterized in that said specific location likely to comprise at least one justification opportunity bit comprises also at least one stuff bit and the number of bits stored in the elastic memory (7, 8) and the control of the selector means (10), at each time defined by the reduced insertion bit rate D2/n, are conditioned also by the number of frames constructed previously.

4. Device according to claim 1 characterized in that the "n" selector units are controlled by a counter (30) with a capacity of "n" incremented at the bit rate for insertion of "n"-bit words likely to comprise a justification opportunity bit and comprising a stuff bit and the increment of which is adapted to assume one of two possible values according to the justification command.

# FIG.1

EP 0 435 130 B1

# FIG.2

# FIG.3

EP 0 435 130 B1

# FIG.4A

EP 0 435 130 B1

| | M0 M1 M2 M3 | A0 A1 A2 A3 | B0 B1 B2 B3 | C0 C1 C2 C3 | EC | $\alpha$ | $\beta$ |
|---|---|---|---|---|---|---|---|
| $t_0$ | $e_0$ $e_1$ $e_2$ $e_3$ | | | | | | |
| $t_1$ | $e_4$ $e_5$ $e_6$ $e_7$ | $e_0$ $e_1$ $e_2$ $e_3$ | | | 1 | 1 | 0 |
| $t_2$ | $e_8$ $e_9$ $e_{10}$ $e_{11}$ | $e_4$ $e_5$ $e_6$ $e_7$ | $e_0$ $e_1$ $e_2$ $e_3$ | $e_0$ $e_1$ $e_2$ $e_3$ | | | |
| $t_3$ | $e_{12}$ $e_{13}$ $e_{14}$ $e_{15}$ | $e_8$ $e_9$ $e_{10}$ $e_{11}$ | $e_4$ $e_5$ $e_6$ $e_7$ | $e_4$ $e_5$ $e_6$ $e_7$ | 2 | 0 | 1 |
| $t_4$ | $e_{16}$ $e_{17}$ $e_{18}$ $e_{19}$ | $e_{12}$ $e_{13}$ $e_{14}$ $e_{15}$ | $e_8$ $e_9$ $e_{10}$ $e_{11}$ | $e_7$ $e_8$ $e_9$ $e_{10}$ | | | |
| $t_5$ | $e_{20}$ $e_{21}$ $e_{22}$ $e_{23}$ | $e_{16}$ $e_{17}$ $e_{18}$ $e_{19}$ | $e_{12}$ $e_{13}$ $e_{14}$ $e_{15}$ | $e_{11}$ $e_{12}$ $e_{13}$ $e_{14}$ | 3 | 1 | 1 |
| $t_6$ | $e_{24}$ $e_{25}$ $e_{26}$ $e_{27}$ | $e_{20}$ $e_{21}$ $e_{22}$ $e_{23}$ | $e_{16}$ $e_{17}$ $e_{18}$ $e_{19}$ | $e_{14}$ $e_{15}$ $e_{16}$ $e_{17}$ | | | |
| $t_7$ | $e_{28}$ $e_{29}$ $e_{30}$ $e_{31}$ | $e_{24}$ $e_{25}$ $e_{26}$ $e_{27}$ | $e_{20}$ $e_{21}$ $e_{22}$ $e_{23}$ | $e_{18}$ $e_{19}$ $e_{20}$ $e_{21}$ | 0 | 0 | 0 |
| $t_8$ | $e_{32}$ $e_{33}$ $e_{34}$ $e_{35}$ | $e_{28}$ $e_{29}$ $e_{30}$ $e_{31}$ | $e_{24}$ $e_{25}$ $e_{26}$ $e_{27}$ | $e_{21}$ $e_{22}$ $e_{23}$ $e_{24}$ | | | |
| $t_9$ | $e_{32}$ $e_{33}$ $e_{34}$ $e_{35}$ | $e_{28}$ $e_{29}$ $e_{30}$ $e_{31}$ | $e_{24}$ $e_{25}$ $e_{26}$ $e_{27}$ | $e_{25}$ $e_{26}$ $e_{27}$ $e_{28}$ | 1 | 1 | 0 |
| $t_{10}$ | | | | $e_{28}$ $e_{29}$ $e_{30}$ $e_{31}$ | | | |

# FIG. 4 B

| | M0 M1 M2 M3 | A0 A1 A2 A3 | B0 B1 B2 B3 | C0 C1 C2 C3 | EC | $\alpha$ | $\beta$ |
|---|---|---|---|---|---|---|---|
| $t_0$ | $e_0$ $e_1$ $e_2$ $e_3$ | | | | | | |
| $t_1$ | $e_4$ $e_5$ $e_6$ $e_7$ | $e_0$ $e_1$ $e_2$ $e_3$ | | | 1 | 1 | 0 |
| $t_2$ | $e_8$ $e_9$ $e_{10}$ $e_{11}$ | $e_4$ $e_5$ $e_6$ $e_7$ | $e_0$ $e_1$ $e_2$ $e_3$ | $e_0$ $e_1$ $e_2$ $e_3$ | | | |
| $t_3$ | $e_{12}$ $e_{13}$ $e_{14}$ $e_{15}$ | $e_8$ $e_9$ $e_{10}$ $e_{11}$ | $e_4$ $e_5$ $e_6$ $e_7$ | $e_4$ $e_5$ $e_6$ $e_7$ | 2 | 0 | 1 |
| $t_4$ | $e_{16}$ $e_{17}$ $e_{18}$ $e_{19}$ | $e_{12}$ $e_{13}$ $e_{14}$ $e_{15}$ | $e_8$ $e_9$ $e_{10}$ $e_{11}$ | $e_7$ $e_8$ $e_9$ $e_{10}$ | | | |
| $t_5$ | $e_{20}$ $e_{21}$ $e_{22}$ $e_{23}$ | $e_{16}$ $e_{17}$ $e_{18}$ $e_{19}$ | $e_{12}$ $e_{13}$ $e_{14}$ $e_{15}$ | $e_{11}$ $e_{12}$ $e_{13}$ $e_{14}$ | 3 | 1 | 1 |
| $t_6$ | $e_{24}$ $e_{25}$ $e_{26}$ $e_{27}$ | $e_{20}$ $e_{21}$ $e_{22}$ $e_{23}$ | $e_{16}$ $e_{17}$ $e_{18}$ $e_{19}$ | $e_{14}$ $e_{15}$ $e_{16}$ $e_{17}$ | | | |
| $t_7$ | $e_{28}$ $e_{29}$ $e_{30}$ $e_{31}$ | $e_{24}$ $e_{25}$ $e_{26}$ $e_{27}$ | $e_{20}$ $e_{21}$ $e_{22}$ $e_{23}$ | $e_{18}$ $e_{19}$ $e_{20}$ $e_{21}$ | 0 | 0 | 0 |
| $t_8$ | $e_{32}$ $e_{33}$ $e_{34}$ $e_{35}$ | $e_{28}$ $e_{29}$ $e_{30}$ $e_{31}$ | $e_{24}$ $e_{25}$ $e_{26}$ $e_{27}$ | $e_{21}$ $e_{22}$ $e_{23}$ $e_{24}$ | | | |
| $t_9$ | $e_{32}$ $e_{33}$ $e_{34}$ $e_{35}$ | $e_{28}$ $e_{29}$ $e_{30}$ $e_{31}$ | $e_{24}$ $e_{25}$ $e_{26}$ $e_{27}$ | $e_{25}$ $e_{26}$ $e_{27}$ $e_{28}$ | 2 | 0 | 1 |
| $t_{10}$ | | | | $e_{27}$ $e_{28}$ $e_{29}$ $e_{30}$ | | | |

EP 0 435 130 B1

FIG.5

FIG.6